# EUROPEAN PATENT APPLICATION

(11) **EP 4 772 864 A1**
(43) Date of publication of application: **08.07.2026**
(21) Application number: 23956284.6
(22) Date of filing: 23.10.2023
(51) Int. Cl.: G01N 23/046, G01N 23/18, B07C 5/34, B07C 5/38, B65G 47/90

(54) **INDUSTRIAL CT INSPECTION LINE FOR BATTERIES**

(71) Applicant: Shenzhen Yarui Intelligent Technology Co., Ltd., Shenzhen, Guangdong 518000 (CN)
(72) Inventor: XIN, Sikong, Shenzhen, Guangdong 518000 (CN); LIAO, Tianyu, Shenzhen, Guangdong 518000 (CN)
(74) Representative: Díaz de Bustamante y Terminel, Isidro
(86) International application number: PCT/CN2023/125848
(87) International publication number: WO 2025/086026

(57) **Abstract**

A battery industrial CT inspection line (100), including: a loading conveyor line (10), an unloading conveyor line (20) that is arranged side by side and spaced apart from the loading conveyor line (10); a CT detection mechanism (30) configured to receive and synchronously detect two batteries (72); first handling mechanism (40) configured to transport a battery (72) and a fixture (70). The loading conveyor line (10), CT detection mechanism (30), and unloading conveyor line (20) are provided along a path of the first handling mechanism (40) transporting the battery (72). The first handling mechanism (40) is configured to transport two batteries (72) from the loading conveyor line (10) to the CT detection mechanism (30) for simultaneous detection, improving detection efficiency and reducing detection time.

## Description

### TECHNICAL FIELD

The present disclosure relates to the field of battery detection technologies, and in particular, to a battery industrial Computed Tomography, (CT) inspection line.

### BACKGROUND

Compared to wound batteries, laminated batteries have advantages in performance, completeness, and space utilization. With the development of new energy vehicles, laminated batteries have gradually occupied a part of the power battery market and are widely used in new energy vehicles. However, laminated batteries have higher process requirements. The lamination process requires each pole piece to be cut twice, and a battery involves dozens of cuts. Each cut carries the risk of burrs on the crosssection of the pole pieces, causing misalignment, twisting, and rotation during lamination, which affects the quality of the battery. Checking the slitting of the stack has become a problem that every battery manufacturer needs to solve.

The existing online industrial CT systems need to place each battery in the CT detection mechanism for detection. After the battery detection in the CT detection mechanism is completed, the batteries in the CT detection mechanism are removed and placed in the next battery for detection. The batteries are placed one by one in the CT detection mechanism for detection, which affects the efficiency of battery detection.

### SUMMARY

One of the purposes of an embodiment of the present application is to provide a battery industrial CT inspection line.

### Technical solutions

The technical solution adopted in the embodiment of the resent application is as follows.

In a first aspect, a battery industrial CT inspection line is provided, which includes:
a loading conveyor line, configured to transport a fixture carrying a to-be-detected battery;
an unloading conveyor line, configured to transport the fixture carrying a detected battery, and the unloading conveyor line is arranged side by side and spaced apart from the loading conveyor line;
a CT detection mechanism, configured to receive and synchronously detect two batteries; and
first handling mechanisms, configured to transport the battery and the fixture;
where the loading conveyor line, the CT detection mechanism, and the unloading conveyor line are provided along a path of the first handling mechanisms transporting the battery.

In one embodiment, the first handling mechanisms include first clamping components, a first lifting drive component configured to drive the first clamping components to rise and fall, and a first lateral driving component configured to drive the first lifting drive component to move along a width direction of the loading conveyor line.

In one embodiment, there are two first clamping components, and the first handling mechanisms further include a first slide seat configured to support the two first clamping components, and a power output end of the first lifting drive component is connected to the first slide seat.

In one embodiment, the CT detection mechanism includes a scanning mechanism and two detection platforms, the two detection platforms are respectively provided on opposite two sides of the scanning mechanism along a length direction of the loading conveyor line, the two detection platforms are configured to carry the battery and place the battery in the scanning mechanism, and the scanning mechanism is configured to scan the battery.

In one embodiment, the detection platforms include a clamping seat configured to clamp the battery, a first driver configured to drive the clamping seat to rotate, and a first movable platform configured to drive the first driver to move; the first driver is provided on the first movable platform, and a power output end of the first driver is connected to the clamping seat.

In one embodiment, the scanning mechanism includes a scanning rack, a turntable component, a radiation source, and a detector; the turntable component is provided on the scanning rack, the radiation source and the detector are provided on a power output end of the turntable component, the radiation source and the detector on provided on opposite two sides; the turntable component is configured to drive the radiation source and the detector to rotate.

In one embodiment, two sides of the scanning mechanism are provided with the first handling mechanisms in a thickness direction, and the first handling mechanisms correspond one-to-one with the detection platforms.

In one embodiment, there are a plurality of CT detection mechanisms, and the plurality of CT detection mechanisms are arranged along a length direction of the loading conveyor line; there are a plurality pairs of first handling mechanisms, with two first handling mechanisms in each pair provided on two side of the CT detection mechanisms in a thickness direction.

In one embodiment, the battery industrial CT inspection line further includes a second handling mechanism configured to transport the battery and the fixture at an output end of the unloading conveyor line.

In one embodiment, the second handling mechanism includes second clamping components configured to grasp the battery, a third clamping component configured to grasp the fixture, a second lifting drive component configured to drive the second clamping components and the third clamping component to rise and fall, and a second lateral driving component configured to drive the second lifting drive component to move along a width direction of the loading conveyor line, where a power output end of the second lateral driving component is connected to the second lifting drive component.

In one embodiment, there are two third clamping components, and the second handling mechanism further includes a second slide seat configured to support the two third clamping components, where the second slide seat is connected to a power output end of the second lifting drive component.

In one embodiment, a distance between the two second clamping components is equal to half of a distance between an input end of the loading conveyor line and the output end of the unloading conveyor line.

In one embodiment, a buffer position configured to store the fixture is provided between an input end of the loading conveyor line and the output end of the unloading conveyor line, and the buffer position is provided on a transmission path of the second handling mechanism;
a distance between the buffer position and the input end of the loading conveyor line is equal to a distance between the buffer position and the output end of the unloading conveyor line.

In one embodiment, there are two second lifting drive components, a power output end of one of the two second lifting drive components is connected to the second clamping components, and a power output end of the other one of the two second lifting drive components is connected to the third clamping component.

In one embodiment, the battery industrial CT inspection line further includes a third handling mechanism configured to transport the battery to the loading conveyor line, a first buffer line configured to store non-conforming products output by the unloading conveyor line, and a fourth handling mechanism configured to output qualified products.

In one embodiment, the third handling mechanism includes a first gripper head configured to grip a tray, a second gripper head configured to grip the battery, and a first driving component configured to drive the first gripper head and the second gripper head to move;
the fourth handling mechanism includes a third gripper head configured to grip the tray, a fourth gripper head configured to grip the battery, and a second driving component configured to drive the third gripper head and fourth gripper head;
the battery industrial CT inspection line further includes a second buffer line configured to transport the tray from the third handling mechanism to the fourth handling mechanism.

### Beneficial effect

The beneficial effect of the battery industrial CT inspection line provided in the embodiment of the present application is that: by using the first handling mechanism, the battery can be transported to the CT detection mechanism. When the first handling mechanism transports the two batteries on the loading conveyor line to the CT detection mechanism, the CT detection mechanism can simultaneously detect the two batteries, after the CT detection mechanism completes the detection of the two batteries, the first handling mechanism can transport the batteries to the unloading conveyor line. Due to the ability of CT detection mechanisms to simultaneously detect the two batteries, the detection efficiency can be improved, the number of batteries detected per unit time can be increased, and the detection capacity can be increased.

### BRIEF DESCRIPTION OF DRAWINGS

In order to provide a clearer explanation of the technical solution in the embodiments of the present application, a brief introduction will be given to the drawings required for the embodiments or exemplary technical descriptions. It is obvious that the drawings described below are only some embodiments of the present application. For those skilled in the art, other drawings can be obtained based on these drawings without creative work.
FIG. 1 is a battery industrial CT inspection line provided in an embodiment of the present application.
FIG. 2 is a schematic diagram of an internal structure of the battery industrial CT inspection line provided in an embodiment of the present application.
FIG. 3 is a schematic diagram of a three-dimensional structure of a loading conveyor line in an embodiment of the present application.
FIG. 4 is a schematic diagram of a three-dimensional structure of a CT detection mechanism in an embodiment of the present application.
FIG. 5 is a schematic diagram of a three-dimensional structure of a scanning mechanism in an embodiment of the present application.
FIG. 6 is a schematic diagram of a three-dimensional structure of a detection platform in an embodiment of the present application.
FIG. 7 is a schematic diagram of a three-dimensional structure of a first handling mechanism in an embodiment of the present application.
FIG. 8 is a schematic diagram of a three-dimensional structure of a first clamping component in FIG. 7.
FIG. 9 is a schematic diagram of a three-dimensional structure of the loading conveyor line, unloading conveyor line, first buffer line, second handling mechanism, and second buffer line in FIG. 2.
FIG. 10 is a schematic diagram of a three-dimensional structure of a second handling mechanism in an embodiment of the present application.
FIG. 11 is a schematic diagram of a three-dimensional structure of a third handling mechanism in an embodiment of the present application.

Numeral reference: 100- battery industrial CT inspection line; 10- loading conveyor line; 101- loading position; 11- first bracket; 12- first belt; 13- first driven wheel; 14- first drive wheel; 15- second driver; 20-unloading conveyor line; 30- CT detection mechanism; 31- scanning mechanism; 311- scanning rack; 312- turntable component; 313- radiation source; 314- detector; 315- first distance adjustment component; 316- second distance adjustment component; 32- detection platform; 321- clamping seat; 322- first driver; 323- first movable platform; 3231- third driving component; 3232- fourth driving component; 3233- fifth driving component; 40- first handling mechanism; 41- first clamping component; 411- clamp plate; 412- sliding plate; 413- adjustment component; 414- third driver; 415- third slide seat; 42- first lifting drive component; 43- first lateral driving component; 44- first slide seat; 50- second handling mechanism; 51- second clamping component; 52- third clamping component; 53- second lifting drive component; 54- second lateral driving component; 55- second slide seat; 56- buffer position; 61-third handling mechanism; 611- first gripper head; 612- second gripper head; 613- first driving component; 62- fourth handling mechanism; 63- first buffer line; 630- unloading position; 64- second buffer line; 70- fixture; 71- tray; 72- battery; 80- isolation room.

### DESCRIPTION OF EMBODIMENTS

In order to make the purpose, technical solution, and advantages of the present application clearer and more understandable, the following will provide further detailed explanations of the present application in combination with the accompanying drawings and embodiments. It should be understood that the specific embodiments described herein are only configured to explain the present invention and are not intended to limit the scope of the present application.

It should be noted that when a component is referred to as "fixed to" or "provided to" another component, it can be directly or indirectly on the other component. When a component is referred to as "connected" to another component, it can be directly or indirectly connected to that other component. The directional or positional relationships indicated by the terms "up", "down", "left", "right", etc. are based on the directional or positional relationships shown in the accompanying drawings and are for ease of description only. They do not indicate or imply that the device or component referred to must have a specific orientation, be constructed and operated in a specific orientation, and therefore cannot be understood as a limitation of the present application. For those skilled in the art, specific meanings of the above terms can be understood according to specific circumstances. Terms "first" and "second" are only used for descriptive purposes and should not be understood as indicating or implying relative importance or implying the quantity of technical features. The meaning of "a plurality of" is two or more, unless otherwise specified.

In order to illustrate the technical solution provided in this application, a detailed explanation will be given below in combination with specific drawings and embodiments.

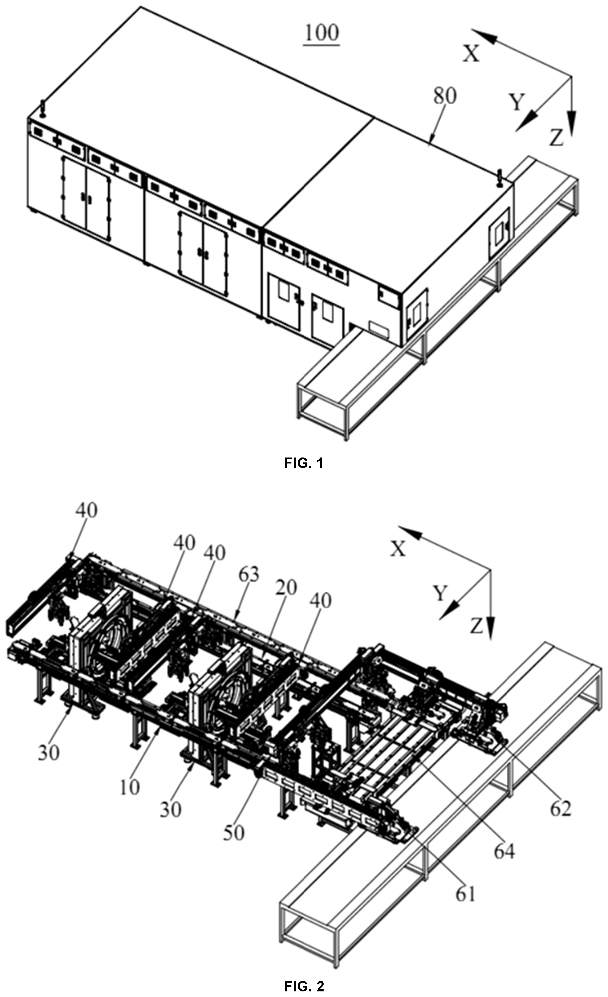

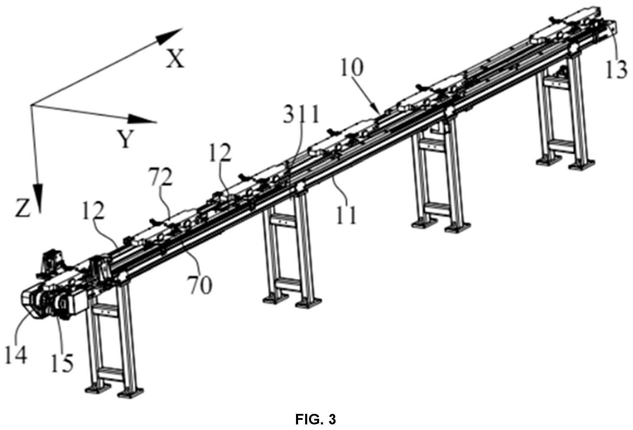

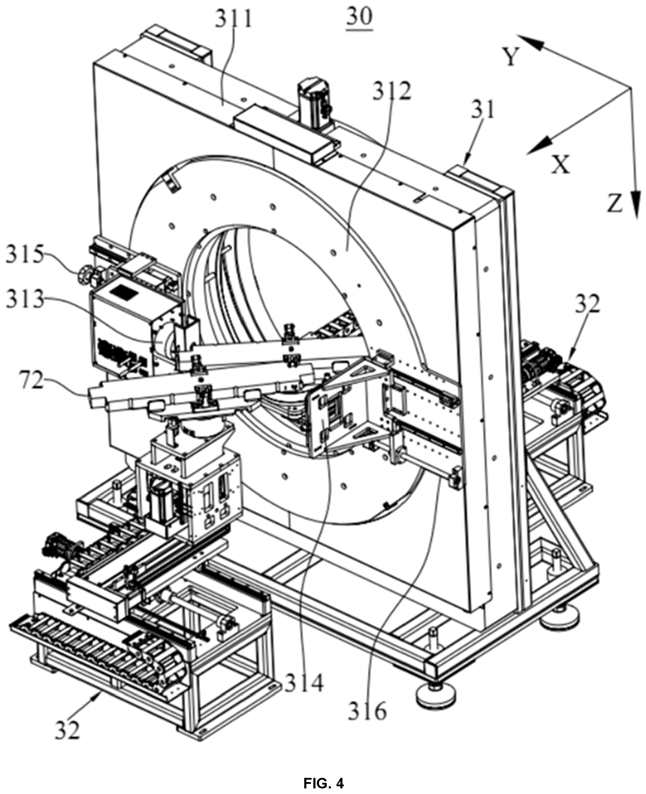

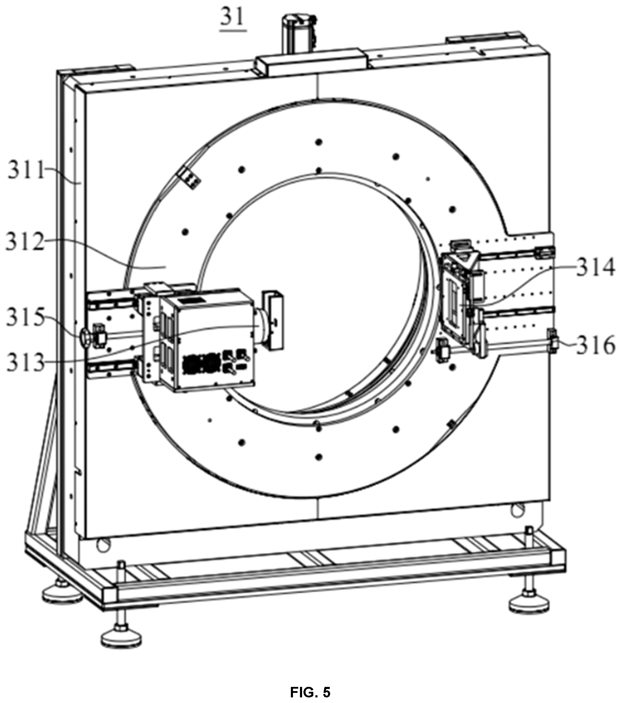

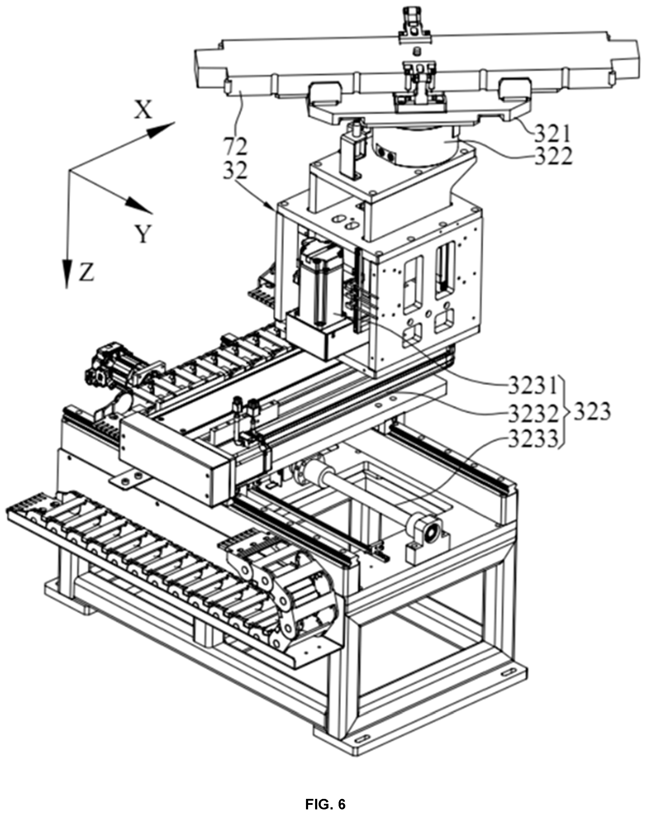

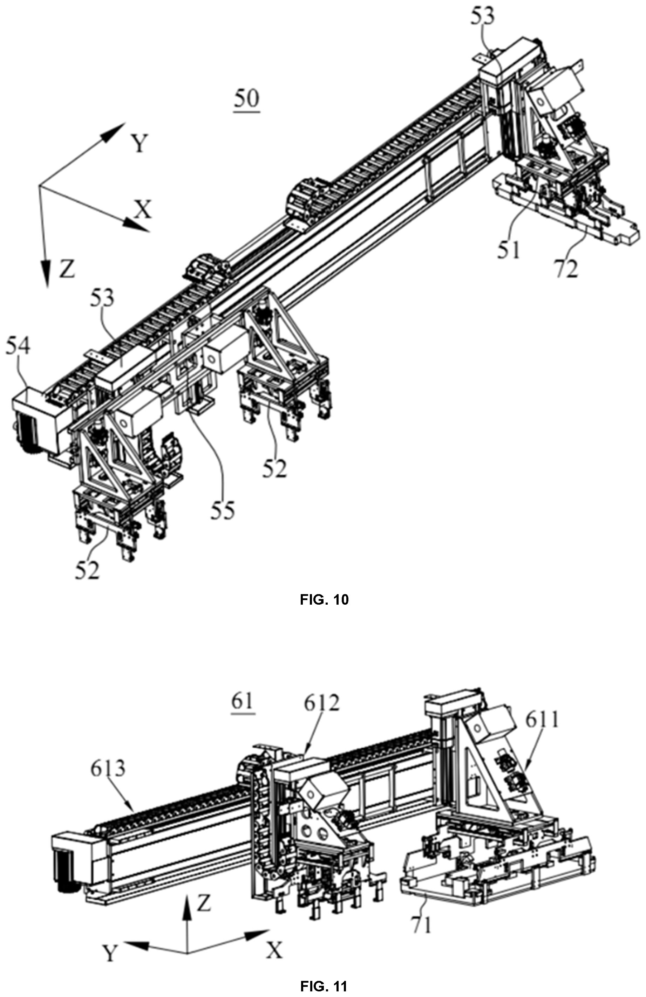

Please refer to FIGs. 1 to 11. Some embodiments of the present application provide a battery industrial CT inspection line 100. The battery industrial CT inspection line 100 includes a loading conveyor line 10, an unloading conveyor line 20, a CT detection mechanism 30, and a first handling mechanism 40. The unloading conveyor line 20 is arranged side by side with the loading conveyor line 10 and spaced apart. The loading conveyor line 10, the CT detection mechanism 30, and the unloading conveyor line 20 are arranged along a path of the first handling mechanism 40 for transporting a battery 72 (as shown in a Y-axis direction in FIG. 2). The loading conveyor line 10 is configured to transport a fixture 70 to carry a to-be-detected battery 72, that is, the battery 72 can be disassembled and loaded onto the fixture 70. The unloading conveyor line 20 is configured to transport the fixture 70 carrying a detected battery 72. The CT detection mechanism 30 is configured to receive and synchronously detects two batteries 72. The first handling mechanism 40 is configured to hand the battery 72 and fixture 70. By using the first handling mechanism 40, two batteries 72 can be transported from the loading conveyor line 10 to the CT detection mechanism 30. The CT detection mechanism 30 can simultaneously detect two batteries 72, thereby improving detection efficiency and reducing detection time.

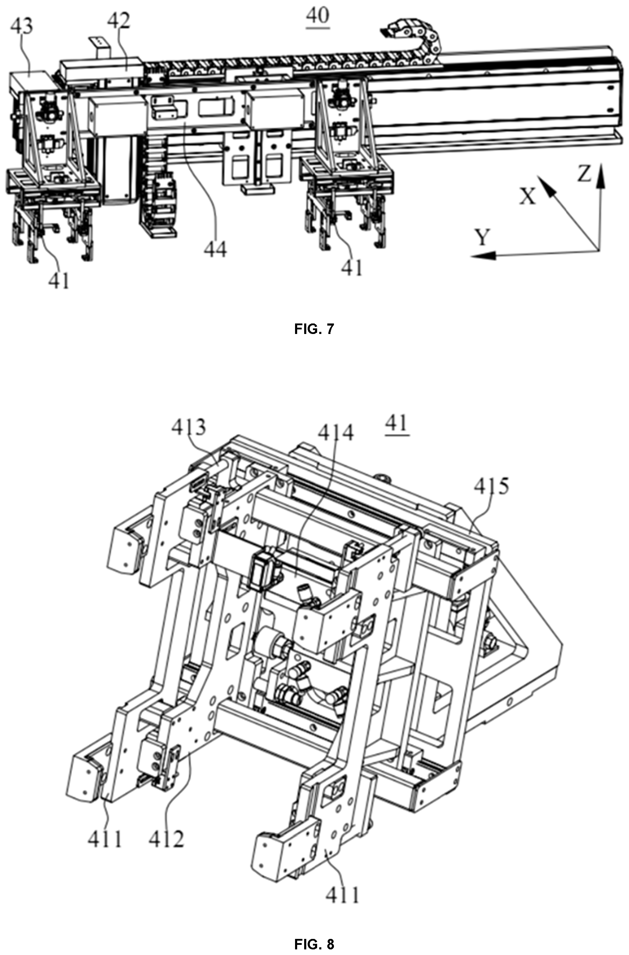

In an embodiment, referring to FIGs. 2, 7, and 8, the first handling mechanism 40 includes first clamping components 41, a first lifting drive component 42, and a first lateral driving component 43. The first lifting drive component 42 is configured to drive the first clamping components 41 to rise and fall (move along a Z-axis direction in FIG. 7), and the first lateral driving component 43 is configured to drive the first lifting drive component 42 to move along a width direction Y of the loading conveyor line 10. By using the first lifting drive component 42, the first clamping components 41 can be driven to rise and fall, so that the first lateral driving component 43 can drive the first lifting drive component 42 to move laterally. The first lifting drive component 42 and the first lateral driving component 43 can be linear driving components, and the width direction Y of the loading conveyor line 10 is perpendicular to a length direction X of the loading conveyor line 10.

Optionally, the first clamping components 41 include two clamp plates 411, two sliding plates 412, a third driver 414, and a third slide seat 415. The two clamp plates 411 are arranged opposite each other and are configured to clamp opposite two sides of the battery 72. The two sliding plates 412 are respectively provided at two ends of the third slide seat 415, and each clamp plate 411 is connected to a corresponding sliding plate 412. The third driver 414 is provided on the third slide seat 415 and connected to the sliding plates 412. The third driver 414 is configured to drive the two sliding plates 412 to approach or move away from each other. The third slide seat 415 is connected to a power output end of the first lifting drive component 42. The third driver 414 drives the two sliding plates 412 to approach each other, and then drives two clamp plates 411 to cooperate and clamp the two sides of the battery 72 or fixture 70 to facilitate the transportation of the battery 72 or fixture 70. The number of the third drivers 414 can be two, each connected to two sliding plates 412 to control the movement of the sliding plates 412, clamping or releasing of the battery 72.

Optionally, the sliding plates 412 are slidably connected to the clamp plates 411, and the first clamping components 41 further include an adjustment component 413 configured to adjust a sliding position of the sliding plates 412 and the clamp plates 411 to adapt to a thickness of different batteries 72 or fixtures 70. One end of the clamp plates 411 away from the third slide seat 415 is provided with a clamping arm, which cooperates with a lower end of the sliding plates 412 to clamp one side of the battery 72 (or fixture 70). The adjustment component 413 can be an adjusting screw. By rotating the adjusting screw, a distance between the clamping arm and the sliding plates 412 can be adjusted. This makes the structure simple and convenient for processing and assembly.

In an embodiment, referring to FIGs. 2, 7, and 8, the number of the first clamping components 41 is two. The first handling mechanism 40 further includes a first slide seat 44, which supports two first clamping components 41. A power output end of the first lifting drive component 42 is connected to the first slide seat 44. When the first lifting drive component 42 drives the first slide seat 44 to rise and fall, it can drive the two first clamping components 41 to rise and fall synchronously. This can form a dual headed handling robot to improve the handling efficiency of the battery 72 and the fixture 70. Of course, in other embodiments of the present application, the first lifting drive components 42 can also be two, and the two first lifting drive components 42 are respectively connected to the two first clamping components 41 to achieve independent lifting control of the two first clamping components 41. Similarly, the number of the first lateral driving components 43 can also be two.

In an embodiment of the present application, the first handling mechanism 40 may include first clamping components 41 and a three-axis robotic arm. Through the three-axis robotic arm, the first clamping components 41 can be controlled to transport the battery 72 or fixture 70.

In an embodiment, referring to FIGs. 2 to 6, the CT detection mechanism 30 includes a scanning mechanism 31 and two detection platforms 32. The two detection platforms 32 are provided on opposite two sides of the scanning mechanism 31 along the length direction X of the loading conveyor line 10.

The detection platforms 32 are configured to carry the battery 72 and place the battery 72 on the scanning mechanism 31. The scanning mechanism 31 is configured to scan the battery 72 to achieve detection of the battery 72. When the first handling mechanism 40 transports two batteries 72 separately to the detection platform 32, the two detection platforms 32 can simultaneously place the batteries 72 inside the scanning mechanism 31, so that the scanning mechanism 31 can achieve synchronous detection of the two batteries 72.

Optionally, each CT detection mechanism 30 can synchronously transport batteries 72 to the two detection platforms 32 through a first handling mechanism 40, and synchronously transport the fixture 70 to the unloading conveyor line 20 through another first handling mechanism 40; or the battery 72 and fixture 70 can be transported through the first handling mechanism 40.

In an embodiment, referring to FIGs. 2 to 6, the detection platforms 32 include a clamping seat 321, a first driver 322, and a first movable platform 323. The clamping seat 321 is configured to clamp the battery 72, and a power output end of the first driver 322 is connected to the clamping seat 321. The first driver 322 is configured to drive the clamping seat 321 to rotate, and the first movable platform 323 is configured to drive the first driver 322 to move. The first driver 322 is provided on the first movable platform 323. The first driver 322 can drive the clamping seat 321 to rotate, thereby driving the battery 72 to rotate and adjusting the position and angle of one end of the battery 72 extending into the scanning mechanism 31. The first movable platform 323 can adjust the position of the clamping seat 321, so that the first handling mechanism 40 can load the battery 72 onto the clamping seat 321 and control the battery 72 to extend into the scanning mechanism 31 to achieve detection of the batteries 72. When two batteries 72 are synchronously detected, they can be controlled to extend parallel and spaced into the scanning mechanism 31.

Optionally, the first movable platform 323 includes a third driving component 3231, a fourth driving component 3232, and a fifth driving component 3233. A power output end of the third driving component 3231 is connected to the first driver 322, and the third driving component 3231 is configured to drive the first driver 322 to rise and fall. A power output end of the fourth driving component 3232 is connected to the third driving component 3231, and the fourth driving component 3232 is configured to drive the third driving component 3231 to move along the length direction X of the loading conveyor line 10. A power output end of the fifth driving component 3233 is connected to the fourth driving component 3232, and the fifth driving component 3233 is configured to drive the fourth driving component 3232 to move along the width direction Y of the loading conveyor line 10. This can not only adjust the horizontal position of battery 72 but also adjust the height position of the battery 72, rendering it convenient to adjust the position and angle of the battery 72 extending into scanning mechanism 31. Of course, in other embodiments of the present application, the first movable platform 323 may be a two-axis movable platform configured to adjust a horizontal position of the clamping seat 321.

In an embodiment, referring to FIGs. 2 to 5, the scanning mechanism 31 includes a scanning rack 311, a turntable component 312, a radiation source 313, and a detector 314. The turntable component 312 is provided on the scanning rack 311, and the radiation source 313 and the detector 314 are provided on a power output end of the turntable component 312. The radiation source 313 is arranged opposite to the detector 314, and the turntable component 312 is configured to adjust rotational positions of the radiation source 313 and the detector 314. The radiation source 313 is configured to emit radiation, and the detector 314 is configured to receive radiation. The radiation source 313 can be a micro focal point radiation source, and the detector 314 can be a digital flat panel detector. The rotation position and speed of the radiation source 313 and detector 314 can be controlled through the turntable component 312 to facilitate the detection of the battery 72.

Optionally, the turntable component 312 includes a turntable, a cross-roller bearing, a motor, and a reducer. The cross-roller bearing is rotatably connected to the scanning rack 311 and the turntable. The motor is provided on the scanning rack 311, and the reducer is provided on a power output end of the motor. The reducer is connected to the turntable. When the motor rotates, the reducer drives the turntable to rotate to control the scanning angle and rotation speed.

Optionally, the radiation source 313 is slidably provided on the turntable component 312, and the scanning mechanism 31 further includes a first distance adjustment component 315. The first distance adjustment component 315 is provided on the turntable component 312 and is connected to the radiation source 313. The first distance adjustment component 315 is configured to adjust a distance between the radiation source 313 and an axis of the turntable component 312. The first distance adjustment component 315 can be a linear driving component or a manual adjustment component, such as a handwheel or a motor driven screw nut structure, to achieve fine adjustment of the distance.

Optionally, the detector 314 is slidably provided on the turntable component 312, and the scanning mechanism 31 further includes a second distance adjustment component 316, and the second distance adjustment component 316 is provided on the turntable component 312 and connected to the detector 314. The second distance adjustment component 316 is configured to adjust a distance between the detector 314 and the axis of the turntable component 312. The second distance adjustment component 316 can be a linear driving component or a manual adjustment component, etc. The second distance adjustment component 316 can have the same or similar structure as the first distance adjustment component 315.

Optionally, the scanning mechanism 31 further includes a limit component for limiting a rotation angle of the turntable component 312 to control a rotation angle range of the turntable component 312.

In an embodiment, referring to FIGs. 2 to 8, the scanning mechanism 31 is provided with the first handling mechanisms 40 on two sides in a thickness direction, the scanning mechanism 31 corresponds one-to-one with the detection platforms 32. By providing the first handling mechanisms 40 on two sides of the scanning mechanism 31, it is possible to transport the battery 72 to the two detection platforms 32 respectively, reducing the time required for transporting the battery 72 and the fixture 70, and improving the efficiency of transporting the battery 72 and the fixture 70. A thickness direction of the scanning mechanism 31 is the same as the length direction X of the loading conveyor line 10.

In an embodiment, referring to FIGs. 2 to 8, there are a plurality of CT detection mechanisms 30 arranged along the length direction X of the loading conveyor line 10. There are a plurality of pairs of first handling mechanisms 40, with two of them located on two sides of the CT detection mechanism 30 in the thickness direction. By using the plurality of CT detection mechanisms, it is possible to simultaneously detect the plurality of pairs of batteries 72, thereby improving detection efficiency. By using the plurality of pairs of first handling mechanisms 40, it is possible to transport batteries 72 to each CT detection mechanism 30 separately, achieving independent operation of a plurality of detection positions. Optionally, the number of the CT detection mechanisms 30 can be, but is not limited to, two, three, or four.

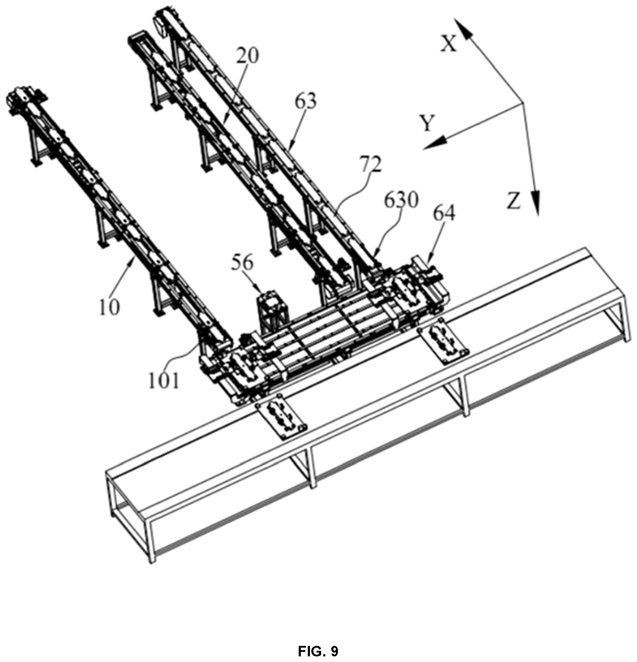

In an embodiment, referring to FIGs. 2, 9, and 10, the battery industrial CT inspection line 100 further includes a second handling mechanism 50 configured to transport the battery 72 and fixture 70 at an output end of the unloading conveyor line 20. The second handling mechanism 50 can transport the battery 72 to an unloading position 630 (as shown in an input end of the first buffer line 63 in FIG. 9), and transport the fixture 70 to a loading position 101 (as shown in an input end of the loading conveyor line 10 in FIG. 9), in order to achieve the recycling of the fixture 70 when loading the battery 72. By using the second handling mechanism 50, it is possible to output the battery 72 and fixture 70 on the unloading conveyor line 20.

In an embodiment, referring to FIGs. 2, 9, and 10, the second handling mechanism 50 includes second clamping components 51, a third clamping component 52, a second lifting drive component 53, and a second lateral driving component 54. The second clamping components 51 are configured to grip the battery 72, the third clamping component 52 is configured to grip the fixture 70, the second lifting drive component 53 is configured to drive the second clamping components 51 and the third clamping component 52 to rise and fall, and the second lateral driving component 54 is configured to drive the second lifting drive component 53 to move along the width direction Y of the loading conveyor line 10. A power output end of the second lateral driving component 54 is connected to the second lifting drive component 53. By using the second clamping components 51, the battery 72 can be grasped, and by using the third clamping component 52, the fixture 70 can be clamped. Through the second lateral driving component 54 and the second lifting drive component 53, the battery 72 can be transported from the output end of the unloading conveyor line 20 to the unloading position 630, and the fixture 70 can be transported to the loading position 101 of the loading conveyor line 10, in order to achieve the recycling of the battery 72 and the fixture 70.

Optionally, the second clamping components 51 and the third clamping component 52 may adopt the same or similar structure as the first clamping components 41, the second lifting drive component 53 may adopt the same or similar structure as the first lifting drive component 42, and the second lateral driving component 54 may adopt the same or similar structure as the first lateral driving component 43. The number of the second lifting drive components 53 can be one or more. When the number of the second lifting drive components 53 is a plurality of, the second clamping components 51 and the third clamping component 52 can be connected to different second lifting drive components 53 to achieve separate rising and falling of each second lifting drive component 53. The number of the second lateral driving component 54 can be one, and the second lateral driving component 54 can drive the synchronous movement of the second clamping components 51 and the third clamping component 52. The number of the second lateral driving components 54 can be a plurality of, and the second lateral driving components 54 can drive the second clamping components 51 and the third clamping component 52 to move respectively.

In an embodiment, referring to FIGs. 2, 9, and 10, the number of the third clamping components 52 is two. The second handling mechanism 50 further includes a second slide seat 55, which supports the two third clamping components 52. The second slide seat 55 is connected to a power output end of the second lifting drive component 53. The use of the two third clamping components 52 is beneficial for improving the transporting efficiency of the fixture 70.

In an embodiment, referring to FIGs. 2, 9, and 10, a distance between the two third clamping components 52 is equal to half of a distance between the input end of the loading conveyor line 10 and the output end of the unloading conveyor line 20. By controlling the distance between the two third clamping components 52 to be half of the distance between the input end of the loading conveyor line 10 and the unloading conveyor line 20, the two third clamping components 52 can be configured to alternately transport the fixture 70, thereby improving the transporting efficiency of the fixture 70.

In an embodiment, referring to FIGs. 2, 9, and 10, a buffer position 56 is provided between the input end of the loading conveyor line 10 and the output end of the unloading conveyor line 20. The buffer position 56 is configured to store the fixture 70 and is provided on a transporting path of the second handling mechanism 50. When the third clamping component 52 far away from the loading conveyor line 10 transfers the fixture 70 to above the buffer position 56, the buffer position 56 can support the fixture 70 so that the third clamping component 52 far away from the loading conveyor line 10 can release the fixture 70 onto the buffer position 56, and the third clamping component 52 close to the loading conveyor line 10 can transport the fixture 70 on the buffer position 56 to the loading conveyor line 10. Of course, in other embodiments of the present application, two third clamping components 52 can also be independently raised and fallen, by different second lifting drive components 53.

Optionally, a distance between the buffer position 56 and the input end of the loading conveyor line 10 is equal to a distance between the buffer position 56 and the output end of the unloading conveyor line 20. In this way, when the two third clamping components 52 correspond to the buffer position 56 and the output end of the unloading conveyor line 20, they can synchronously rise and fall,, respectively grasping the fixture 70 on the buffer position 56 and the fixture 70 on the output end of the unloading conveyor line 20. When the two third clamping components 52 correspond to the buffer position 56 and the input end of the loading conveyor line 10, they can synchronously lift and release the fixture 70 to the buffer position 56 and the input end of the loading conveyor line 10, respectively.

In an embodiment, referring to FIGs. 2, 9, and 10, there are two second lifting drive components 53. One second lifting drive component 53 has a power output end connected to the second clamping components 51, and the other second lifting drive component 53 has a power output end connected to the third clamping component 52. This can avoid interference between the lifting of the second clamping components 51 and the lifting of the third clamping component 52. Optionally, one second lifting drive component 53 is connected to the second slide seat 55, and the other second lifting drive component 53 is connected to the second clamping components 51. The two third clamping components 52 are arranged along a length direction of the second slide seat 55 (as shown in the Y-axis direction in FIG. 9), and the second slide seat 55 is provided on one side of the second clamping components 51 near the loading conveyor line 10. This can keep the rising and falling of the two third clamping components 52 synchronized, and enable the rising and falling of the second clamping components 51 and the third clamping component 52 to be independent of each other, thereby avoiding interference from the transporting of the battery 72 and the fixture 70.

In an embodiment, please refer to FIGs. 2, 3, and 9. The loading conveyor line 10 includes a first bracket 11, two first belts 12, two first driven wheels 13, two first drive wheels 14, and a second driver 15. The first driven wheels 13 and first drive wheels 14 are respectively rotatably provided at two ends of the first bracket 11 along the length direction (X-axis direction). The two first driven wheels 13 are coaxially connected, and the two first drive wheels 14 are coaxially connected. The second driver 15 is provided on the first bracket 11, and a power output end of the second driver 15 is connected to the first drive wheels 14. The second driver 15 is configured to drive the first drive wheels 14 to rotate, thereby driving the first belts 12 to operate. A sliding path is formed between the two first belts 12, which is configured to insert the fixture 70. In this way, the first belts 12 can support the movement of the fixture 70 to control a movement position of the battery 72. Optionally, the first drive wheels 14 and the first driven wheels 13 are gears, the first belts 12 are a synchronous belt, and a limit strip is provided on the first belts 12. The limit strip is configured to push the fixture 70 to move synchronously with the first belts 12 when the first belts 12 are running, thereby improving the movement accuracy of the battery 72.

In an embodiment, referring to FIGs. 2, 9, and 11, the battery industrial CT inspection line 100 further includes a third handling mechanism 61, a first buffer line 63, and a fourth handling mechanism 62. The third handling mechanism 61 is configured to transport the battery 72 to the loading conveyor line 10, the first buffer line 63 is configured to store the non-conforming products output from the unloading conveyor line 20, and the fourth handling mechanism 62 is configured to output qualified products. After the battery 72 is detected by the CT detection mechanism 30, it can be judged as qualified or unqualified according to a preset value. When the battery 72 is a qualified product, the fourth handling mechanism 62 transports the battery 72 and outputs it. When the battery 72 is a defective product, it is transported to the first buffer line 63 for storage. In this way, an automatic feeding of the battery 72 is achieved through the third handling mechanism 61, and the sorting of battery 72 is achieved after detection through the first buffer line 63 and the fourth handling mechanism 62. Optionally, the third handling mechanism 61 and the fourth handling mechanism 62 can adopt the same or similar structure. The first buffer line 63 can be a conveyor belt mechanism, which can store a plurality of defective products.

In an embodiment, referring to FIGs. 2, 9, and 11, the third handling mechanism 61 includes a first gripper head 611, a second gripper head 612, and a first driving component 613. The first gripper head 611 is configured to grip a tray 71, the second gripper head 612 is configured to grip the battery 72, and the first driving component 613 is configured to drive the first gripper head 611 and the second gripper head 612 to move. By using the first gripper head 611 and the second gripper head 612, the battery 72 can be loaded onto the tray 71 and automatically separated from the tray 71 during loading. Optionally, the first driving component 613 may include a lifting driving structure and a longitudinal driving structure. The lifting driving structure is configured to drive the first gripper head 611 to rise and fall, and the longitudinal driving structure is configured to drive the lifting driving structure to move along the length direction X of the loading conveyor line 10. The first gripper head 611 and the second gripper head 612 can adopt a similar structure. The first gripper head 611 and the second gripper head 612 can be synchronized in lifting and translating, or they can be independent of each other in lifting and translating.

In an embodiment, referring to FIGs. 2, 9, and 11, the fourth handling mechanism 62 includes a third gripper head, a fourth gripper head, and a second driving component. The third gripper head is configured to grip the tray 71, the fourth gripper head is configured to grip the battery 72, and the second driving component is configured to drive the third and fourth gripper heads. By using the third and fourth gripper heads, the battery 72 can be automatically placed in the tray 71 during unloading, and the battery 72 can be loaded onto the tray 71 for unloading. Optionally, the third gripper head and the first gripper head 611 may adopt a similar or identical structure, the fourth gripper head and the second gripper head 612 may adopt a similar or identical structure, and the second driving component may adopt a similar or identical structure to the first driving component 613.

In an embodiment, referring to FIGs. 2, 9, and 11, the battery industrial CT inspection line 100 further includes a second buffer line 64, and the second buffer line 64 is configured to transfer the tray 71 from the third handling mechanism 61 to the fourth handling mechanism 62. By using the second buffer line 64, the tray 71 carrying the battery 72 during loading can be transferred to the position carrying qualified products during unloading, thus achieving automatic transfer of the tray 71.

Optionally, the second buffer line 64 includes a second bracket, a second belt, a second driven wheel, a second drive wheel, and a fifth driver. The second driven wheel and the second drive wheel are respectively rotatably provided at two ends of the second bracket along the length direction (Y-axis direction), and the fifth driver is provided on the second bracket. A power output end of the fifth driver is connected to the second drive wheel, and the fifth driver is configured to drive the second drive wheel to rotate to drive the second belt to rotate. The tray 71 moves along a length direction of the second bracket. In this way, the second belt can support a movement of the tray 71 for the purpose of transporting tray 71.

In an embodiment, referring to FIGs. 1 to 3, the battery industrial CT inspection line 100 further includes an isolation room 80, in which the loading conveyor line 10, the unloading conveyor line 20, the CT detection mechanism 30, and the first handling mechanism 40 are accommodated. This can achieve isolation of the CT detection mechanism 30, prevent radiation leakage, improve the safety of the battery industrial CT inspection line 100, and play a certain role in dust prevention and protection.

The above are only optional embodiments of the present application and are not intended to limit the present application. For technicians in this field, this application can have various changes and variations. Any modifications, equivalent substitutions, improvements, etc. made within the spirit and principles of this application shall be included within the scope of the claims of this application.

## Claims

1. A battery industrial CT inspection line, comprising:
a loading conveyor line, configured to transport a fixture carrying a to-be-detected battery;
an unloading conveyor line, configured to transport the fixture carrying a detected battery, and the unloading conveyor line is arranged side by side and spaced apart from the loading conveyor line;
a CT detection mechanism, configured to receive and synchronously detect two batteries; and
first handling mechanisms, configured to transport the battery and the fixture;
wherein the loading conveyor line, the CT detection mechanism, and the unloading conveyor line are provided along a path of the first handling mechanisms transporting the battery.

2. The battery industrial CT inspection line according to claim 1, wherein the first handling mechanisms comprise first clamping components, a first lifting drive component configured to drive the first clamping components to rise and fall, and a first lateral driving component configured to drive the first lifting drive component to move along a width direction of the loading conveyor line.

3. The battery industrial CT inspection line according to claim 2, wherein there are two first clamping components, and the first handling mechanisms further comprise a first slide seat configured to support the two first clamping components, and a power output end of the first lifting drive component is connected to the first slide seat.

4. The battery industrial CT inspection line according to claim 1, wherein the CT detection mechanism comprises a scanning mechanism and two detection platforms, the two detection platforms are respectively provided on opposite two sides of the scanning mechanism along a length direction of the loading conveyor line, the two detection platforms are configured to carry the battery and place the battery in the scanning mechanism, and the scanning mechanism is configured to scan the battery.

5. The battery industrial CT inspection line according to claim 4, wherein the detection platforms comprise a clamping seat configured to clamp the battery, a first driver configured to drive the clamping seat to rotate, and a first movable platform configured to drive the first driver to move;
the first driver is provided on the first movable platform, and a power output end of the first driver is connected to the clamping seat.

6. The battery industrial CT inspection line according to claim 4, wherein the scanning mechanism comprises a scanning rack, a turntable component, a radiation source, and a detector;
the turntable component is provided on the scanning rack,
the radiation source and the detector are provided on a power output end of the turntable component, the radiation source and the detector on provided on opposite two sides;
the turntable component is configured to drive the radiation source and the detector to rotate.

7. The battery industrial CT inspection line according to claim 4, wherein two sides of the scanning mechanism are provided with the first handling mechanisms in a thickness direction, and the first handling mechanisms correspond one-to-one with the detection platforms.

8. The battery industrial CT inspection line according to claim 1, wherein there are a plurality of CT detection mechanisms, and the plurality of CT detection mechanisms are arranged along a length direction of the loading conveyor line; there are a plurality pairs of first handling mechanisms, with two first handling mechanisms in each pair provided on two side of the CT detection mechanisms in a thickness direction.

9. The battery industrial CT inspection line according to claim 1, wherein the battery industrial CT inspection line further comprises a second handling mechanism configured to transport the battery and the fixture at an output end of the unloading conveyor line.

10. The battery industrial CT inspection line according to claim 9, wherein the second handling mechanism comprises second clamping components configured to grasp the battery, a third clamping component configured to grasp the fixture, a second lifting drive component configured to drive the second clamping components and the third clamping component to rise and fall, and a second lateral driving component configured to drive the second lifting drive component to move along a width direction of the loading conveyor line,
wherein a power output end of the second lateral driving component is connected to the second lifting drive component.

11. The battery industrial CT inspection line according to claim 10, wherein there are two third clamping components, and the second handling mechanism further comprises a second slide seat configured to support the two third clamping components, wherein the second slide seat is connected to a power output end of the second lifting drive component.

12. The battery industrial CT inspection line according to claim 11, wherein a distance between the two second clamping components is equal to half of a distance between an input end of the loading conveyor line and the output end of the unloading conveyor line;
wherein a buffer position configured to store the fixture is provided between an input end of the loading conveyor line and the output end of the unloading conveyor line, and the buffer position is provided on a transmission path of the second handling mechanism;
a distance between the buffer position and the input end of the loading conveyor line is equal to a distance between the buffer position and the output end of the unloading conveyor line.

13. The battery industrial CT inspection line according to claim 10, wherein there are two second lifting drive components, a power output end of one of the two second lifting drive components is connected to the second clamping components, and a power output end of the other one of the two second lifting drive components is connected to the third clamping component.

14. The battery industrial CT inspection line according to any one of claims 1 to 13, wherein the battery industrial CT inspection line further comprises a third handling mechanism configured to transport the battery to the loading conveyor line, a first buffer line configured to store non-conforming products output by the unloading conveyor line, and a fourth handling mechanism configured to output qualified products.

15. The battery industrial CT inspection line according to claim 14, wherein the third handling mechanism comprises a first gripper head configured to grip a tray, a second gripper head configured to grip the battery, and a first driving component configured to drive the first gripper head and the second gripper head to move;
the fourth handling mechanism comprises a third gripper head configured to grip the tray, a fourth gripper head configured to grip the battery, and a second driving component configured to drive the third gripper head and fourth gripper head;
the battery industrial CT inspection line further comprises a second buffer line configured to transport the tray from the third handling mechanism to the fourth handling mechanism.
